# EUROPEAN PATENT APPLICATION

(11) **EP 1 901 497 A1**
(43) Date of publication of application: **19.03.2008**
(21) Application number: 07111643.8
(22) Date of filing: 03.07.2007
(51) Int. Cl.: H04L 12/56, H04L 29/14

(54) **Apparatus for low latency communications through an alternate path**

(30) Priority: 14.09.2006 JP 2006250068
(71) Applicant: FUJITSU LIMITED, Kawasaki-shi, Kanagawa 211-8588 (JP)
(72) Inventor: Tokumoto, Susumu, Kawasaki-shi Kanagawa 211-8588 (JP); Sakurai, Fumihiro, Kawasaki-shiKanagawa 211-8588 (JP); Nakayama, Shotaro, Kawasaki-shi Kanagawa 211-8588 (JP); Nakamura, Takashi, Kawasaki-shi Kanagawa 211-8588 (JP); Takahashi, Hajime, Kawasaki-shi Kanagawa 211-8588 (JP); Morohashi, Mitsuo, Kawasaki-shi Kanagawa 211-8588 (JP); Ebisu, Keiichi, Kawasaki-shi Kanagawa 211-8588 (JP); Sawakuri, Takashi, Kawasaki-shi Kanagawa 211-8588 (JP); Naganuma, Masanori, Kawasaki-shi Kanagawa 211-8588 (JP); Sonoda, Ayumi, Kawasaki-shi Kanagawa 211-8588 (JP)
(74) Representative: Kreutzer, Ulrich

(57) **Abstract**

A communication apparatus (103) according to the present embodiment for relaying communication between a first information processing apparatus (101) and a second information processing apparatus (102) through a plurality of communication paths (105, 106) is composed of storing means for storing receiving information received from the first information processing apparatus, communicating means for sending the receiving information, which has been retrieved from the storing means, as sending information, to the second information processing apparatus through at least one communication path among the plurality of the communication paths, and monitoring means for monitoring acknowledging information to be sent from the second information processing apparatus and, when the acknowledging information has not been received, instructing the communicating means to send the receiving information as sending information to the second information processing apparatus through another communication path.

## Description

### BACKGROUND OF THE INVENTION

### 1. Field of the Invention

The present invention relates to a technique for providing redundancy in a communication path between information processing apparatuses.

### 2. Description of the Related Art

Communication paths which constitute network systems are provided with redundancy in order to increase the reliability of the network systems. An information processing apparatus performs communication with another information processing apparatus through a predetermined communication path. When a failure occurs in the communication path which has been used in the communication, the information processing apparatus performs communication with the other information processing apparatus using another communication path which permits communication. With this arrangement, a network system is allowed to continue communication even in a case where a failure occurs.

However, when a failure occurs in a communication path, an information processing apparatus needs to resend information that has been sent to the failed communication path and thus is not able to immediately perform switching of communication paths.

Japanese Unexamined Patent Application Publication No. 2005-26902 discloses a technique related to the technique for providing redundancy in a communication path is described in the patent document below.

### SUMMARY OF THE INVENTION

The present invention has an object to increase the speed of switching of communication paths in a network system while securing reliability of communication.

According to an aspect of the present invention, a communication apparatus relays communication between a first information processing apparatus and a second information processing apparatus through a plurality of communication paths comprises storing means for storing receiving information received from the first information processing apparatus, communicating means for sending the receiving information, which has been retrieved from the storing means, as sending information to the second information processing apparatus through at least one communication path among the plurality of communication paths, and monitoring means for monitoring acknowledging information to be sent from the second information processing apparatus and, when the acknowledging information has not been received, instructing the communicating means to send the receiving information as sending information to the second information processing apparatus through another communication path.

According to the present invention, by retaining information in a communication apparatus for relaying information, which is arranged between information processing apparatuses, switching of communication paths in case of occurrence of a failure in a communication path can be immediately performed.

### BRIEF DESCRIPTION OF THE DRAWINGS

Fig. 1 is a conceptual diagram of a network system according to the present embodiment.
Fig. 2 is a hardware block diagram of a TCP accelerator 103 according to the present embodiment.
Fig. 3 is a conceptual diagram illustrating a transmission path for a packet according to the present embodiment.
Fig. 4 is a conceptual diagram illustrating a transmission path for a packet according to the present embodiment.
Fig. 5 is a conceptual diagram illustrating packet flow in a network system according to the present embodiment.
Fig. 6 is a routing table 600 provided in the TCP accelerator 103 according to the present embodiment.
Fig. 7 is a routing table 700 provided in a TCP accelerator 104 according to the present embodiment.
Fig. 8 is a sequence diagram of a network system according to the present embodiment.
Fig. 9 is a conceptual diagram of a network system according to the present embodiment.
Fig. 10 is a switching table illustrating switching of communication paths according to the present embodiment.

### DESCRIPTION OF THE PREFERRED EMBODIMENTS

In the following, a mode for carrying out the present invention will be described.

### [Embodiment 1]

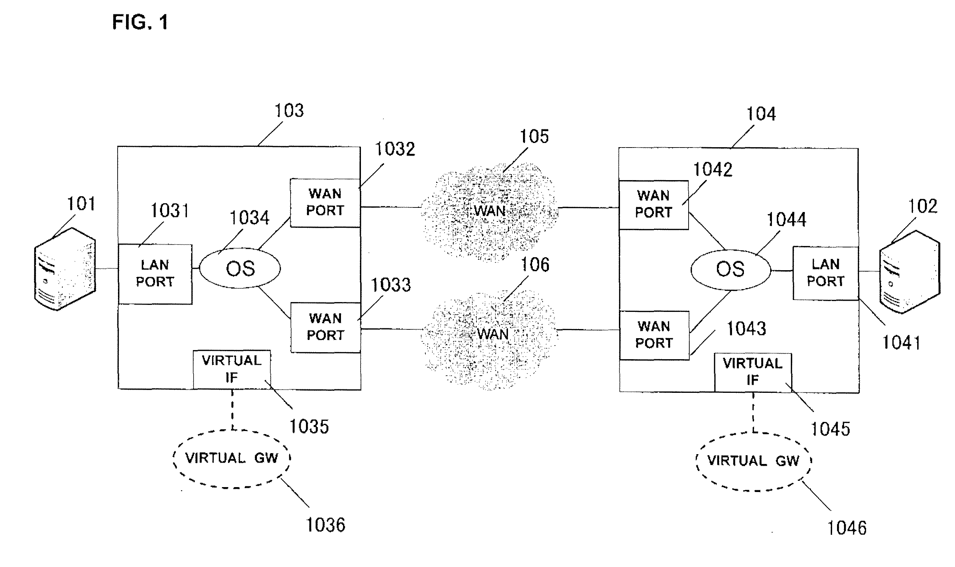

Fig. 1 is a conceptual diagram of a network system according to the present embodiment.

A network system according to the present embodiment is a network system in which a server 101 and a server 102 perform communication via a network. The network system is configured such that TCP accelerators 103 and 104 perform relaying between the server 101 and the server 102. The TCP accelerators 103 and 104 are apparatuses for performing communication via WANs 105 and 106 and serve to increase speed of communication between the server 101 and the server 102. The TCP accelerator 103 and the TCP accelerator 104 are connected to two different networks of the WAN 105 and the WAN 106. The server 101 and the server 102 send and receive information to and from each other using the WANs 105 and 106 as communication paths. The TCP accelerators 103 and 104 are communication apparatuses performing communication using a dedicated protocol, which is only effective between the TCP accelerators (hereinafter referred to as a dedicated protocol). The server 101 communicates with the TCP accelerator 103 using TCP/IP (Transmission Control Protocol/Internet Protocol). Similarly, the server 102 communicates with the TCP accelerator 104 using TCP/IP. Then the TCP accelerator 103 and the TCP accelerator 104 communicate with each other via the WANs 105 and 106 using the dedicated protocol.

The TCP accelerator 103 has a routing table 600, and the TCP accelerator 104 has a routing table 700. These routing tables are tables to which path information regarding destinations of information packets (hereinafter simply referred to as packets) retained in the servers 101 and 102, the TCP accelerators 103 and 104, and routers are written. In a routing table in the present embodiment, "destination", to which a packet is sent, "gateway", which is used in communication, and "interface (I/F)", which is used in communication, are indicated. Information on an intended destination to which the packet is desired to be sent exists in a packet. Each of the TCP accelerators 103 and 104 compares the information on the intended destination with the routing table provided in the TCP accelerator, and sends the packet to a corresponding gateway. Specifically, as illustrated below, a packet contains information on a MAC (Media Access Control) address and an IP address of the destination. Thus, the MAC address and the IP address of the destination are compared with a MAC address and an IP address written to the routing table, and then the packet is sent to a predetermined gateway.

A packet in the present embodiment is composed of a MAC address and an IP address of a source which indicates the source, a MAC address and an IP address of a destination which indicates the destination, a TCP header, and data. The TCP header contains information on a function of a TCP. The TCP header contains information on an individual flag indicating the type of a packet such as an ACK packet, a SYN packet, and a FIN packet, and information on a window size. The data is original information desired to be sent, which is other than control information such as the MAC address of a destination used for transmitting the packet.

The TCP accelerator 103 has a LAN port 1031, WAN ports 1032 and 1033. The LAN port 1031, the WAN ports 1032 and 1033 are all physical interfaces, and the LAN port 1031 is used for connecting the server 101 and the TCP accelerator 103. The WAN port 1032 is connected to a WAN port 1042 provided in the TCP accelerator 104 via the WAN 105. Likewise, the WAN port 1033 is connected to a WAN port 1043 provided in the TCP accelerator 104 via the WAN 106. The TCP accelerator 103 and the TCP accelerator 104 mainly use a communication path between the WAN port 1032 and the WAN 1042 which is provided through WAN 105, as a communication path for performing communication between the server 101 and the server 102.

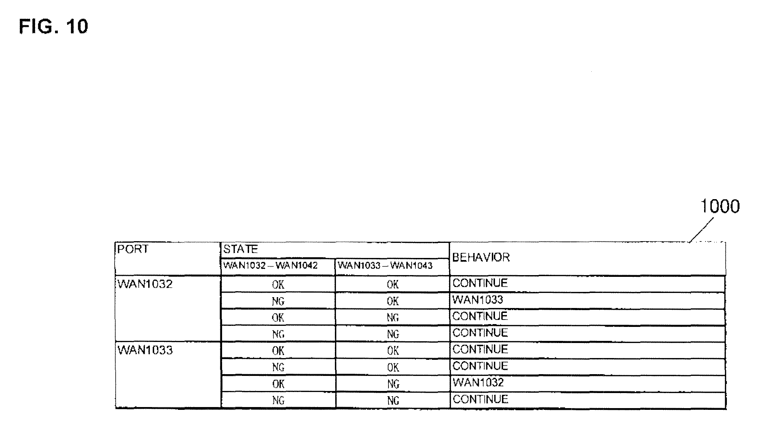

The TCP accelerator 103 and the TCP accelerator 104 send monitor packets to each other through the WAN port 1032 and the WAN port 1042 and through the WAN port 1033 and the WAN port 1043, at time intervals which can be set in advance. The monitor packets are packets which monitor whether or not the communication paths between the WAN port 1032 and the WAN port 1042 and between the WAN port 1033 and the WAN port 1043 are normal. When the TCP accelerator 103 and the TCP accelerator 104 receive the monitor packets, they reply to each other with response packets. If no response packet corresponding to the individual monitor packet is returned, it is determined that a failure occurs in the communication path through the WAN 105 or 106. Switching of the communication paths is performed in accordance with a switching table 1000 illustrated in Fig. 10. The switching table 1000 is stored in a storage unit 202 in the TCP accelerator 103. When the WAN port 1032 is used by the TCP accelerator 103 as an administration port, and both of the communication paths between the WAN port 1032 and the WAN port 1042 and between the WAN port 1033 and the WAN port 1043 are normal, the WAN port 1032 is continued to be used. When a failure occurs in the communication path between the WAN port 1032 and the WAN port 1042, and the communication path between the WAN port 1033 and WAN port 1043 is normal, communication is performed using the WAN port 1033 as the administration port. When the communication path between the WAN port 1032 and the WAN port 1042 is normal, and a failure occurs in the communication path between the WAN port 1033 and the WAN port 1043, communication is continued using the WAN port 1032. When failures occur in both of the communication paths between the WAN port 1032 and the WAN port 1042 and between the WAN port 1033 and the WAN port 1043, switching of the administration port is not performed, and a waiting state is maintained until either one of the communication paths is recovered. When the WAN port 1033 is used by the TCP accelerator 103 as the administration port, and both of the communication paths between the WAN port 1032 and the WAN port 1042 and between the WAN port 1033 and the WAN port 1043 are normal, the WAN port 1033 is continued to be used. When a failure occurs in the communication path between the WAN port 1032 and the WAN port 1042, and the communication path between the WAN port 1033 and the WAN port 1043 is normal, the WAN port 1033 is continued to be used. When the communication path between the WAN port 1032 and the WAN port 1042 is normal, and a failure occurs in the communication path between the WAN port 1033 and the WAN port 1043, communication is performed using the WAN port 1032 as the administration port. When failures occur in both of the communication paths between the WAN port 1032 and the WAN port 1042 and between the WAN port 1033 and the WAN port 1043, switching of the administration port is not performed, and a waiting state is maintained until either one of the communication paths is recovered. The TCP accelerator 104 also has a switching table equivalent to that shown in Fig. 10.

When a failure occurs in the communication path between the WAN port 1032 and the WAN 1042, each of OSs (Operating System) 1034 and 1044 installed in the respective TCP accelerators 103 and 104 switches the communication path to the communication path between the WAN port 1033 and the WAN port 1043.

The TCP accelerator 103 has physical interfaces including the LAN port 1031 and the WAN ports 1032 and 1033. The LAN port 1031 is used for connecting the server 101 and the TCP accelerator 103. The WAN port 1032 is connected to the WAN port 1042 provided in the TCP accelerator 104 via the WAN 105. Similarly, the WAN port 1033 is connected to the WAN port 1043 provided in the TCP accelerator 104 via the WAN 106. The TCP accelerator 104 has physical interfaces including a LAN port 1041 and the WAN ports 1042 and 1043. The LAN port 1041 is used for connecting the server 102 and the TCP accelerator 104. The WAN port 1042 is connected to the WAN port 1032 provided in the TCP accelerator 103 via the WAN 105. Similarly, the WAN port 1043 is connected to the WAN port 1033 provided in the TCP accelerator 103 via the WAN 106.

In addition, the TCP accelerator 103 has a virtual interface 1035. This virtual interface 1035 is connected to a virtual gateway 1036. The virtual interface 1035 and the virtual gateway 1036 do not physically exist and are virtually created by the OS 1034. Setting of the virtual interface 1035 and the virtual gateway 1036 is performed on a software basis. Similarly, the TCP accelerator 104 has a virtual interface 1045. This virtual interface 1045 is connected to a virtual gateway 1046. The virtual interface 1045 and the virtual gateway 1046 do not physically exist and are virtually created by the OS 1044. Setting of the virtual interface 1045 and virtual gateway 1046 is performed on a software basis. The server 101 sends a SYN packet to the virtual gateway 1036. Upon receiving the SYN packet, the virtual gateway 1036 sends an ACK packet to the server 101. Upon receiving the ACK packet from the virtual gateway 1036, the server 101 sends the virtual gateway 1036 an ACK packet notifying that it has received the ACK packet. When the virtual gateway 1036 receives the ACK packet, a session is established between the server 101 and the virtual gateway 1036. The server 101 and the virtual gateway 1036 communicate using TCP/IP. Likewise, the server 102 sends a SYN packet to the virtual gateway 1046. Upon receiving the SYN packet, the virtual gateway 1046 sends an ACK packet to the server 102. Upon receiving the ACK packet from the virtual gateway 1046, the server 102 sends the virtual gateway 1046 an ACK packet notifying that it has received the ACK packet. When the virtual gateway 1046 receives the ACK packet, a session is established between the server 102 and the virtual gateway 1046. The server 102 and the virtual gateway 1046 communicate using TCP/IP. Further, in the virtual gateway 1036 and the virtual gateway 1046, the virtual gateway 1036 sends a SYN packet to the virtual gateway 1046. When the virtual gateway 1046 receives the SYN packet, the virtual gateway 1046 sends an ACK packet to the virtual gateway 1036. Upon receiving the ACK packet, the virtual gateway 1036 sends the virtual gateway 1046 an ACK packet notifying that it has received the ACK packet. When the virtual gateway 1046 receives the ACK packet, a session is established between the virtual gateway 1036 and the virtual gateway 1046.

Sending/receiving of packets between the virtual gateway 1036 and the virtual gateway 1046 is performed, in a physical manner, via the communication path between the WAN port 1032 and the WAN port 1042 which is provided through the WAN 105. When a failure occurs between the communication path between the WAN port 1032 and the WAN port 1042 which is provided through the WAN 105, the OSs 1034 and 1044 switch the communication path to the communication path between the WAN port 1033 and the WAN port 1043 which is provided through the WAN 106, so that sending/receiving of packets between the virtual gateway 1036 and the virtual gateway 1046 is performed. Even in the case where the communication paths are switched, the session between the virtual gateway 1036 and the virtual gateway 1046 is maintained since the OSs 1034 and 1044 switch the physical interfaces for performing communication. With this arrangement, even when a failure occurs in a communication path, the communication path can be switched to another while a session is maintained. Thus, switching of communication paths can be performed without causing packet loss or the like.

In addition a controller described in the claims has functions equivalent to those executed in a control unit 201. In addition, a communication program described in the claims is stored in the storage unit 202 of a communication apparatus. The communication program is a program which can be executed in the TCP accelerator 103.

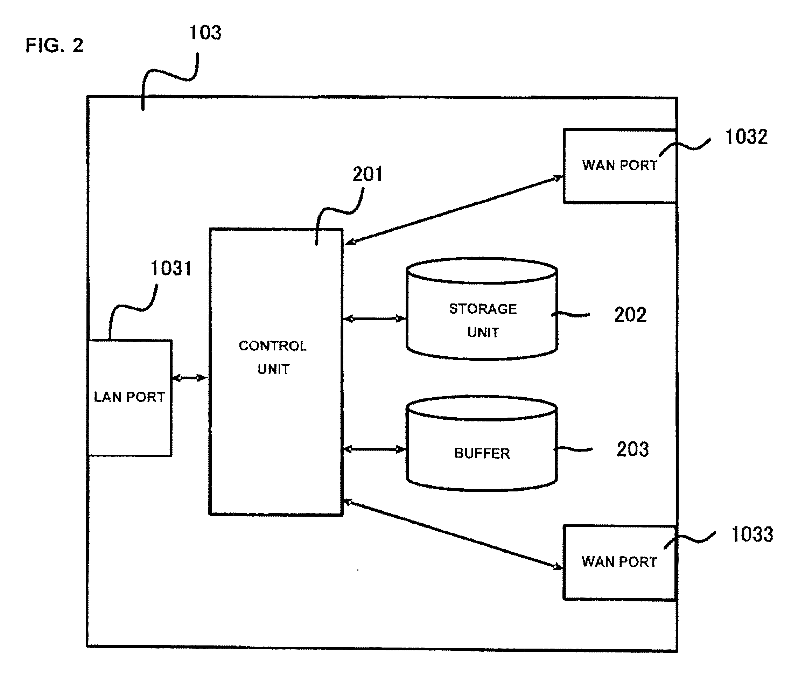

Fig. 2 is a hardware block diagram of the TCP accelerator 103 according to the present embodiment.

The TCP accelerator 103 is composed of the control unit 201, the LAN port 1031, the WAN ports 1032 and 1033, the storage unit 202, and the buffer 203.

The control unit 201 is composed of a CPU, a RAM, etc., and performs various control operations on the LAN port 1031, the WAN ports 1032 and 1033, the storage unit 202, and the buffer 203. These control operations are processed through execution of an OS (Operating System), a control program, etc., which are stored in the storage unit 202. The control unit 201 activates the OS stored in the storage unit 202 so as to perform switching processing of communication paths. The OS stores a packet received from the server 101 in the buffer 203 and also performs processing of invoking the stored packet and sending the packet to the TCP accelerator 104. In the present embodiment, packets are configured to be stored in the buffer 203 and sequentially sent from the WAN port 1032 or the WAN port 1033. The packets sent from the TCP accelerator 103 are deleted from the buffer 203 at regular time intervals. The timing at which the packets that have been sent from the TCP accelerator 103 to the TCP accelerator 103 are deleted may be set to be at a time when the amount of the packets stored in the buffer 203 exceeds a predetermined threshold or after a predetermined time period has elapsed.

The LAN port 1031 is connected to the server 101. The server 101 and the TCP accelerator 103 start a session using TCP/IP and communicate with each other. The control unit 201 stores a packet received from the server 101 via the LAN port 1031 in the buffer 203. At this time, the control unit 201 virtually creates the virtual interface 1035 and the virtual gateway 1036 and processes the packet as if the packet stored in the buffer 203 has been sent to the virtual gateway 1036.

The WAN ports 1032 and 1033 are connected to the TCP accelerator 104 via the WANs 105 and 106, respectively. The WAN port 1032 and the WAN port 1033 are connected to the different WAN port 1042 and WAN port 1043, respectively, which are provided in the TCP accelerator 104. The TCP accelerator 103 has two communication paths to the TCP accelerator 104 which are provided through the WAN port 1032 and the WAN port 1033. Normally, the TCP accelerator 103 communicates with the TCP accelerator 104 using the WAN port 1032. When the OS 1034 operated by the control unit 201 determines that a failure has occurred in the communication path using the WAN port 1032, the OS 1034 switches the failed communication path to the communication path using the WAN port 1033.

The storage unit 202 stores a program, an application, etc., such as the OS 1034, for controlling the TCP accelerator 103. The storage unit 202 also stores a routing table, and the OS 1034 looks up the routing table so as to determine the destination of a packet received by the TCP accelerator and send the packet.

The buffer 203 is a storage area for temporarily storing packets and mainly stores packets received from the server 101. The control unit 202 invokes the stored packets from the buffer 203 and sequentially sends the packets to a predetermined router (not shown) physically connected to the TCP accelerator 103. With this arrangement, a difference between the communication speed at which the server 101 and the TCP accelerator 103 communicate using TCP/IP and the communication speed between the TCP accelerators 103 and 104 is compensated.

In the present embodiment, communication between the TCP accelerator 103 and the TCP accelerator 104 primarily uses the communication path provided through the WAN port 1032. When a failure occurs in the communication path provided through the WAN port 1032, the OS 1034 switches the communication path to the communication path provided through the WAN port 1033 as an alternate path.

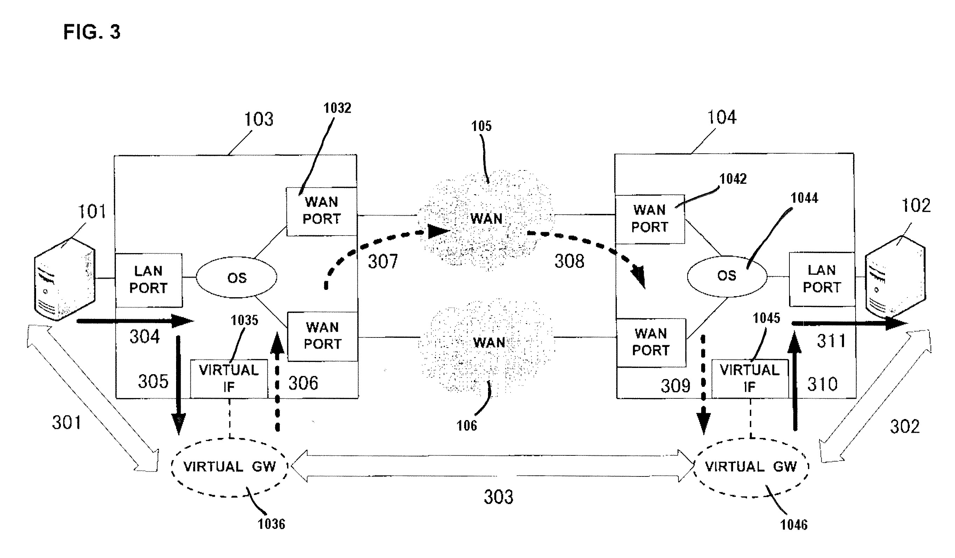

Fig. 3 is a conceptual diagram illustrating transmission paths for a packet according to the present embodiment.

The conceptual diagram illustrates transmission paths used when the server 101 sends a packet to the server 102. Communication between the TCP accelerator 103 and the TCP accelerator 104 uses a communication path between the WAN ports 1032 and 1042 which is provided through the WAN 105.

Firstly, a network system in the present embodiment establishes sessions so as to perform communication. A session between the server 101 and the virtual gateway 1036 is indicated by an arrow 301. Likewise, a session between the server 102 and the virtual gateway 1046 is indicated by an arrow 302. A session between the virtual gateway 1036 and the virtual gateway 1046 is indicated by an arrow 303. The server 101 first sends a SYN packet to the virtual gateway 1036. Upon receiving the SYN packet, the virtual gateway 1036 sends an ACK packet to the server 101. Upon receiving the ACK packet from the virtual gateway 1036, the server 101 sends the virtual gateway 1036 an ACK packet notifying that it has received the ACK packet. When the virtual gateway 1036 receives the ACK packet, the session 301 between the server 101 and the virtual gateway 1036 is established. Likewise, The server 102 sends a SYN packet to the virtual gateway 1046. Upon receiving the SYN packet, the virtual gateway 1046 sends an ACK packet to the server 102. Upon receiving the ACK packet from the virtual gateway 1046, the server 102 sends the virtual gateway 1046 an ACK packet notifying that it has received the ACK packet. When the virtual gateway 1046 receives the ACK packet, the session 302 between the server 102 and the virtual gateway 1046 is established. Also in the virtual gateway 1036 and the virtual gateway 1046, the virtual gateway 1036 sends a SYN packet to the virtual gateway 1046. When the virtual gateway 1046 receives the SYN packet, the virtual gateway 1046 sends an ACK packet to the virtual gateway 1036. Upon receiving the ACK packet, the virtual gateway 1036 sends the virtual gateway 1046 an ACK packet notifying that it has received the ACK packet. When the virtual gateway 1046 receives the ACK packet, the session 303 is established between the virtual gateway 1036 and the virtual gateway 1046.

The server 101 sends the TCP accelerator 103 a packet intended to be sent to the server 102 (S304). The TCP accelerator 103 receives the packet through the LAN port 1031. If it is determined by the OS 1034 that the received packet is a packet intended to be sent to the server 102, the TCP accelerator 103 sends the packet to the virtual gateway 1036 via the virtual interface 1035 (S305). The virtual gateway 1036 encapsulates the received packet. The encapsulated packet is sent from the WAN port 1032 to the TCP accelerator 104 via the WAN 105 (S306, 307, 308). The TCP accelerator 104 receives the encapsulated packet through the WAN port 1042. If it is determined by the OS 1044 that the encapsulated packet is a packet intended to be sent to the server 102 (the virtual gateway 1046 is determined to be the destination), the TCP accelerator 104 sends the packet to the virtual gateway 1046 via the virtual interface 1045 (S309). The virtual gateway 1046 decapsulates the received packet. The decapsulated packet is sent to the server 102 (S310, 311). The server 102 receives the packet, and thus the packet transmission from the server 101 to the server 102 is completed.

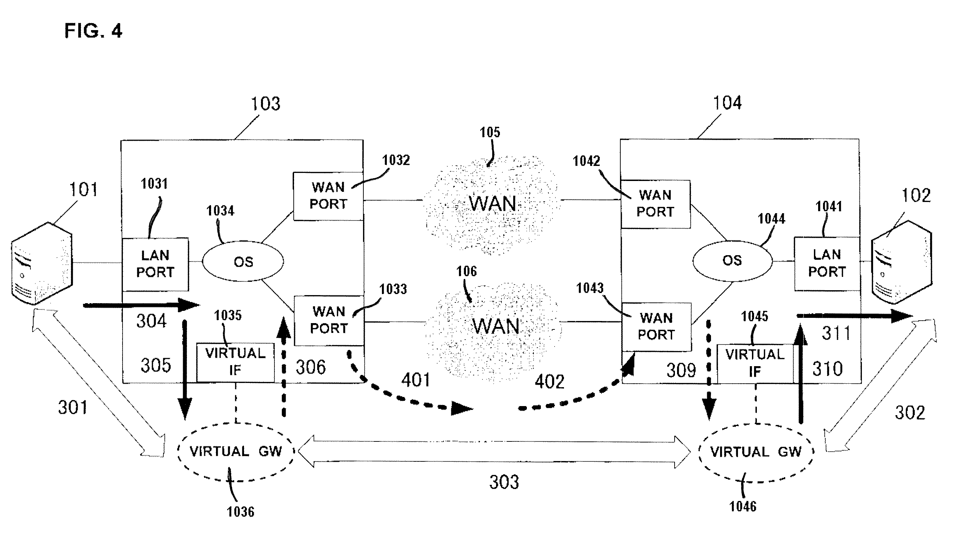

Fig. 4 is a conceptual diagram illustrating transmission paths for a packet in the present embodiment.

The conceptual diagram illustrates transmission paths used when the server 101 sends a packet to the server 102. Communication between the TCP accelerator 103 and TCP accelerator 104 uses a communication path between the WAN ports 1033 and 1043 which is provided through the WAN 106. When a failure occurs in the communication path between the WAN ports 1032 and 1042 which is provided through the WAN 105, switching of communication paths is performed so that communication is performed using the communication path between the WAN ports 1033 and 1043 which is provided through the WAN 106.

In a network system in the present embodiment, sessions are formed to perform communication. A session between the server 101 and the virtual gateway 1036 is indicated by an arrow 301. Likewise, a session between the server 102 and the virtual gateway 1046 is indicated by an arrow 302. A session between the virtual gateway 1036 and the virtual gateway 1046 is indicated by an arrow 303. The server 101 first sends a SYN packet to the virtual gateway 1036. Upon receiving the SYN packet, the virtual gateway 1036 sends an ACK packet to the server 101. Upon receiving the ACK packet from the virtual gateway 1036, the server 101 sends the virtual gateway 1036 an ACK packet notifying that it has received the ACK packet. When the virtual gateway 1036 receives the ACK packet, the session 301 between the server 101 and the virtual gateway 1036 is established. Likewise, the server 102 sends a SYN packet to the virtual gateway 1046. Upon receiving the SYN packet, the virtual gateway 1046 sends an ACK packet to the server 102. Upon receiving the ACK packet from the virtual gateway 1046, the server 102 sends the virtual gateway 1046 an ACK packet notifying that it has received the ACK packet. When the virtual gateway 1046 receives the ACK packet, the session 302 between the server 102 and the virtual gateway 1046 is established. Also in the virtual gateway 1036 and the virtual gateway 1046, the virtual gateway 1036 sends a SYN packet to the virtual gateway 1046. When the virtual gateway 1046 receives the SYN packet, the virtual gateway 1046 sends an ACK packet to the virtual gateway 1036. Upon receiving the ACK packet, the virtual gateway 1036 sends the virtual gateway 1046 an ACK packet notifying that it has received the ACK packet. When the virtual gateway 1046 receives the ACK packet, the session 303 is established between the virtual gateway 1036 and the virtual gateway 1046.

The server 101 sends the TCP accelerator 103 a packet intended to be sent to the server 102 (S304). The TCP accelerator 103 receives the packet through the LAN port 1031. If it is determined by the OS 1034 that the received packet is a packet intended to be sent to the server 102, the TCP accelerator 103 sends the packet to the virtual gateway 1036 via the virtual interface 1035 (S305). The virtual gateway 1036 encapsulates the received packet. The encapsulated packet is sent from the WAN port 1033 to the TCP accelerator 104 via the WAN 106 (S306, 401, 402). The TCP accelerator 104 receives the encapsulated packet through the WAN port 1043. If it is determined by the OS 1044 that the encapsulated packet is a packet intended to be sent to the server 102 (the virtual gateway 1046 is determined to be the destination), the TCP accelerator 104 sends the packet to the virtual gateway 1046 via the virtual interface 1045. The virtual gateway 1046 decapsulates the received packet. The decapsulated packet is sent to the server 102 (S310, 311). The server 102 receives the packet, and thus the packet transmission from the server 101 to the server 102 is completed.

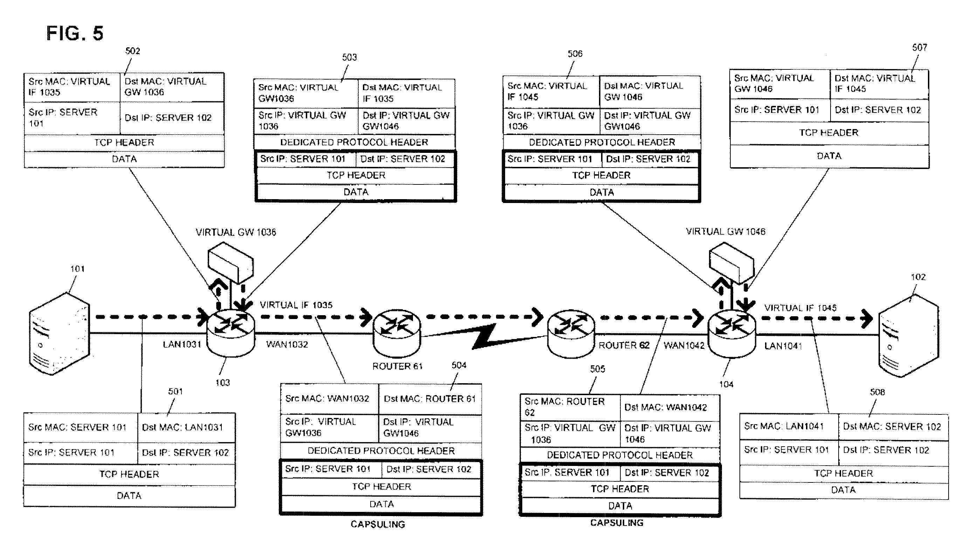

Fig. 5 is a conceptual diagram illustrating packet flow in a network system according to the present embodiment.

A packet 501 to a packet 508 are packets to be sent from the server 101 to the server 102. These packets are transformed in transmission processes by encapsulation, decapsulation, or the like. Each of the packets in the present embodiment is composed of the MAC address and IP address of a source which indicate the source, the MAC address and IP address of a destination which indicate the destination, a TCP header, and data. The TCP header contains information on functions of TCP. The TCP header contains information an individual flag indicating the type of packet such as an ACK packet, a SYN packet, and a FIN packet, and information on a window size. The data is original information desired to be sent, which is other than control information for sending a packet such as the MAC address of a destination.

The server 101 sends the packet 501 to the TCP accelerator 103. The packet 501 is composed of a source MAC address "server 101", a source IP address "server 101", a destination MAC address "LAN port 1031", a destination IP address "server 102", a TCP header, and data. These addresses "server 101", etc., which indicate a MAC address, an IP address, etc., are represented by combinations of numbers. However, these are formally described as "server 101", etc. In the following, also for the other packets (the packet 502 to the packet 508), the names of predetermined sources and destinations are substituted for their MAC addresses and the IP addresses.

The OS 1034 rewrites the source MAC address of the packet 501 received through the LAM port 1031 to "virtual interface 1035" and rewrites the destination MAC address of the packet 501 to "virtual gateway 1036". The OS 1034 sends the packet 502, which has been obtained by the rewriting of the packet 501, to the virtual gateway 1036 via the virtual interface 1035.

The OS 1034 encapsulates the packet 502 in the virtual gateway 1036 so as to generate the packet 503. Specifically, the OS 1034 encapsulates the source IP address "server 101", the destination IP address "server 102", the TCP header, and data of the packet 502. Then OS 1034 then newly adds a source MAC address "virtual gateway 1036", a source IP address "virtual gateway 1036", a destination MAC address "virtual interface 1035", a destination IP address "virtual gateway 1046", and a header of the dedicated protocol used for communication between the TCP accelerator 103 and the TCP accelerator 104, and thus generates the packet 503. The OS 1034 rewrites the source MAC address of the packet 503 received through the virtual interface 1035 to "WAN port 1032" and the destination MAC address to "router 601" and then sends the packet 504, which has been obtained by the rewriting of the packet 503, from the WAN port 1032 to a router 61. The router 61 is one of routers that constitute the WAN 105 and connected to the WAN port 1032. The packet 504 is sequentially delivered to the routers constituting the WAN 105 and received by a router 62. The router 62 is one of the routers that constitute the WAN 105 and connected to the WAN port 1042. The router 62 rewrites the source MAC address of the received packet to "router 62" and the destination MAC address to "WAN port 1042", and sends the packet to the TCP accelerator 104. The MAC address of the packet to be received by the router 62 is "router connected to router 62", the destination MAC address of the packet is "router 62". The OS 1044 of the TCP accelerator 104 rewrites the source MAC address of the packet 505 received through the WAN port 1042 to "virtual interface 1045" and the destination MAC address to "virtual gateway 1046". Then the OS 1044 sends the packet 506, which has been obtained by the rewriting of the packet 505, to the virtual gateway 1046 via the virtual interface 1045. The OS 1044 decapsulates the packet 506 in the virtual gateway 1046, so as to generate the packet 507. The packet 507 is composed of a source MAC address "virtual gateway 1046", a source IP address "server 101", a destination MAC address "virtual interface 1045", a destination IP address "server 102", a TCP header, and data. The OS 1044 rewrites the source MAC address of the packet 607 received through the virtual interface 1045 to "LAN port 1041" and the destination MAC address to "server 102". Then the OS 1044 sends the packet 508, which has been obtained by the rewriting of the packet 507, from the LAN port 1041 to the server 102. When the server 102 receives the packet 508, the packet transmission is terminated.

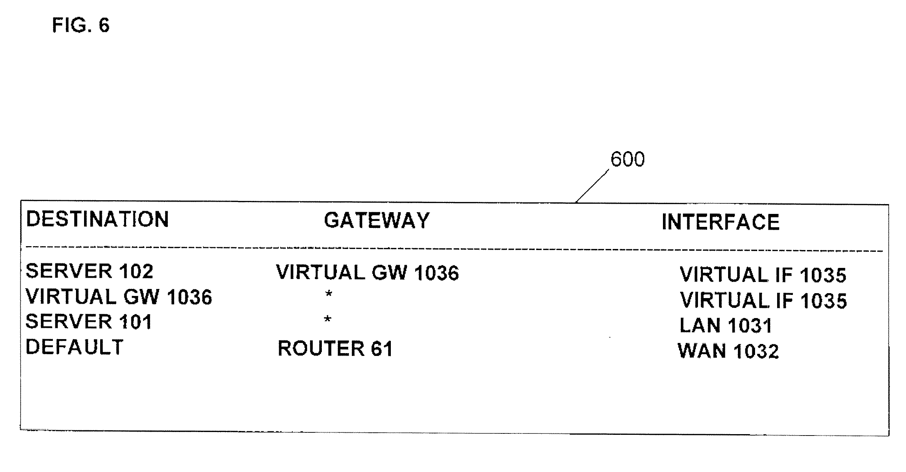

Fig. 6 shows the routing table 600 provided in the TCP accelerator 103 according to the present embodiment.

The routing table 600 is a table for routing a packet, which is stored in the storage unit 202 and managed by the OS 1034.

In the routing table 600, "destination", to which a packet is sent, "gateway", which is used for communication, and "interface", which is used for communication, are indicated. As "destination", the server 102, the virtual gateway 1036, and the server 101 are set. A default corresponding to a location other than the above locations is set. Further, gateways and interfaces which correspond to the individual destinations are written to the routing table 600. The gateway and the interface that correspond to the destination "server 102" are the virtual gateway 1036 and the virtual interface 1035, respectively. There is no gateway that corresponds to the destination "virtual gateway 1036", and the interface that corresponds to the destination "virtual gateway 1036" is the virtual interface 1035. There is no gateway that corresponds to the destination "server 101", and the interface that corresponds to the destination "server 101" is the LAN port 1031. In addition, the gateway and the interface that correspond to the destination "default" are "router 61" and "WAN port 1032", respectively.

Thus, the OS 1034 looks up the routing table 600 so as to determine the destination of a packet and also selects a gateway and an interface to be used for the transmission of the packet.

If the OS 1034 determines that a failure has occurred in a communication path through which a packet is transmitted, the OS 1034 rewrites the gateway corresponding to the default of "destination" from the router 61 to a new router and rewrites the interface corresponding to the default to "WAN port 1033". Note that the new router refers to a router which is connected to the WAN port 1033 and one of routers that constitute the WAN 106.

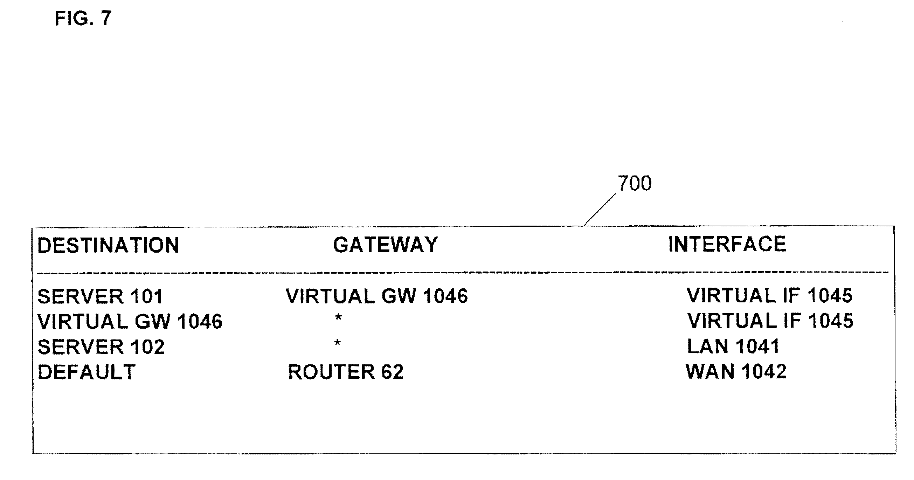

Fig. 7 shows the routing table 700 provided in the TCP accelerator 104 according to the present embodiment.

The routing table 700 is a table for routing a packet, which is saved in a storage unit provided in the TCP accelerator 104 and managed by the OS 1044.

In the routing table 700, "destination", to which a packet is sent, "gateway", which is used for communication, and "interface", which is used for communication, are indicated. For "destination", the server 101, the virtual gateway 1046, and the server 102 are set. A default corresponding to a location other than the above locations is set. Further, gateways and interfaces that correspond to the individual destinations are written to the routing table 700. The gateway and the interface that correspond to the destination "server 101" are the virtual gateway 1046 and the virtual interface 1045, respectively. There is no gateway that corresponds to the destination "virtual gateway 1046", and the interface that corresponds to the destination "virtual gateway 1046" is the virtual interface 1045. There is no gateway that corresponds to the destination "server 102", and the interface that corresponds to the destination "server 102" is the LAN port 1041. In addition, the gateway and the interface that correspond to the "default" are "router 62" and the "WAN port 1042", respectively.

Thus, the OS 1044 looks up the routing table 700, so as to determine the destination of a packet and also select a gateway and an interface to be used for transmission of the packet.

If the OS 1044 determines that a failure has occurred in a communication path through which a packet is sent, the OS 1044 rewrites the gateway that corresponds to the default of "destination" from the router 62 to a new router and rewrites the interface that corresponds to the default to the "WAN 1043". Note that the new router refers to a router which is connected to the WAN 1043 and one of the routers that constitute the WAN 106.

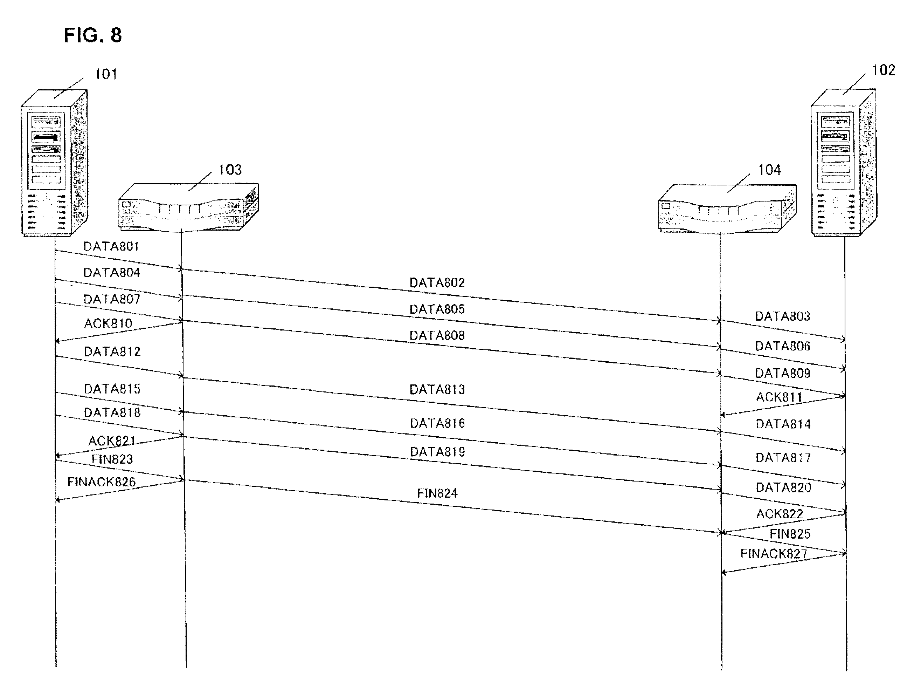

Fig. 8 is a sequence diagram of a network system according to the present embodiment.

The sequence diagram illustrates a sequence in which the server 101 transmits information to the server 102 via the TCP accelerators 103 and 104. The information is divided and transmitted as packets.

First, the server 101 sends packets to the TCP accelerator 103 using TCP/IP. Note that the packets of "information" is referred to as "DATA" in the sequence diagram. The server 101 sequentially sends three packets "DATA 801", "DATA 804", and "DATA 807" to the TCP accelerator 103. When "DATA 807" has been sent, the server 101 temporarily interrupts the transmission of "DATA" and waits for a response from the TCP accelerator 103. Upon receiving "DATA 807", the TCP accelerator 103 replies to the server 101 with "ACK 810" as an acknowledgement response acknowledging that it has received "DATA 801", "DATA 804", and "DATA 807".

The TCP accelerator 103 sends the received "DATA 801" to the TCP accelerator 104 as being "DATA 802". Similarly, the TCP accelerator 103 sends the TCP accelerator 104 the received "DATA 804" as being "DATA 805", and "DATA 807" as being "DATA 808".

The TCP accelerator 104 sends the server 102 the received "DATA 802" as being "DATA 803". Similarly, the TCP accelerator 104 sends the server 102 the received "DATA 805" as being "DATA 806" and "DATA 808" as being "DATA 809".

Upon receiving the "DATA 809", the server 102 replies to the TCP accelerator 104 with "ACK 811" as an acknowledgment response acknowledging that it has received the three packets "DATA 803", "DATA 806", and "DATA 809".

Upon receiving "ACK 810", the server 101 resumes the transmission of "DATA". The server 101 sequentially sends three packets "DATA 812", "DATA 815", and "DATA 818" to the TCP accelerator 103. When the "DATA 818" has been sent, the server 101 interrupts the transmission of "DATA" again and waits for a response from the TCP accelerator 103. Upon receiving the "DATA 818", the TCP accelerator 103 replies to the server 101 with "ACK 821" as an acknowledgement response acknowledging that it has received the three packets "DATA 812", "DATA 815", and "DATA 818".

The TCP accelerator 103 sends the TCP accelerator 104 the received "DATA 812" as being "DATA 813". Similarly, the TCP accelerator 103 sends the TCP accelerator 104 the received "DATA 815" as being "DATA 816" and "DATA 818" as being "DATA 819".

The TCP accelerator 104 sends the server 102 the received "DATA 813" as being "DATA 814". Similarly, the TCP accelerator 104 sends the server 102 the received "DATA 816" as being "DATA 817" and "DATA 819" as being "DATA 820".

Upon receiving the "DATA 820", the server 102 replies to the TCP accelerator 104 with "ACK 822" as an acknowledgement response acknowledging that it has received the three packets "DATA 814", "DATA 817", and "DATA 820".

When terminating the transmission of "DATA", the server 101 sends the TCP accelerator 103 "FIN 823" indicating that the transmission of "DATA" is to be terminated. The TCP accelerator 103 sends the TCP accelerator 104 "FIN 823" as being "FIN 824". The TCP accelerator 104 sends "FIN 825". Upon receiving "FIN 823", the TCP accelerator 103 replies to the server 101 with "FINACK 826" as an acknowledgement response acknowledging that it has received "FIN 823". Thus, the information transmission processing between the server 101 and the TCP accelerator 103 is terminated. Similarly, upon receiving "FIN 825", the server replies to the TCP accelerator 104 "FINACK 827" as an acknowledgement response acknowledging that it has received "FIN 825", and thus the information transmission processing in which the server 101 sends information to the server 102 is terminated.

### [Embodiment 2]

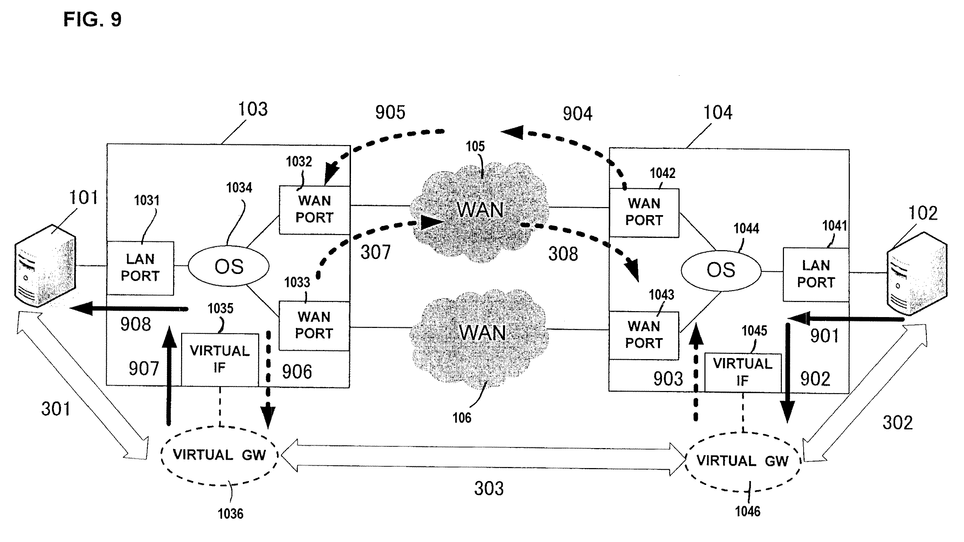

Fig. 9 is a conceptual diagram of a network system according to the present embodiment.

The conceptual diagram illustrates communication paths used when the server 101 and the server 102 send and receive packets.

When the server 101 sends a packet to the server 102 via the WAN 105 that exists between the TCP accelerator 103 and the TCP accelerator 104, the packet is sent to the server 102 via the virtual gateway 1036 and the virtual gateway 1046. The server 101 sends the packet to the TCP accelerator 103. The TCP accelerator 103 receives the packet through the LAN port 1031. When it is determined by the OS 1034 that the received packet is a packet intended to be sent to the server 102, the TCP accelerator 103 sends the packet to the virtual gateway 1036 via the virtual interface 1035. The virtual gateway 1036 encapsulates the received packet. The encapsulated packet is sent from the WAN port 1032 to the TCP accelerator 104 via the WAN 105. The TCP accelerator 104 receives the encapsulated packet through the WAN port 1042. When it is determined by the OS 1044 that the encapsulated packet is a packet intended to be sent to the server 102 (when the virtual gateway 1046 is determined to be the destination), the TCP accelerator 104 sends the packet to the virtual gateway 1046 via the virtual interface 1045. The virtual gateway 1046 decapsulates the received packet. The, the decapsulated packet is sent to the server 102. The server 102 receives the packet, and thus the transmission of the packet from the server 101 to the server 102 is completed.

Also in a case where the server 102 sends a packet to the server 101, the packet is sent via the WAN 105, which has been used when the server 101 sent the packet to the server 102. An administration port used for communication is set in advance. Switching of the administration port is performed by a TCP accelerator with a larger node ID, and then another TCP accelerator with a smaller node ID adapts the administration port. It is determined whether or not the administration port is normal using a monitor packet and a corresponding response packet. Note that a node ID refers to information which identifies a TCP accelerator and to a unique number assigned to each TCP accelerator.

The server 102 sends a packet for the server 101 to the TCP accelerator 104 (S901). The TCP accelerator 104 receives the packet through the LAN port 1041. When it is determined by the OS 1044 that the received packet is a packet intended to be sent to the server 101, the TCP accelerator 104 sends the packet to the virtual gateway 1046 via the virtual interface 1045 (S902). The virtual gateway 1046 encapsulates the received packet. The encapsulated packet is sent from the WAN port 1042 to the TCP accelerator 103 via the WAN 105 (S903, 904, 905). The TCP accelerator 103 receives the encapsulated packet through the WAN port 1032. If it is determined by the OS 1033 that the encapsulated packet is a packet intended to be sent to the server 101 (if the virtual gateway 1036 is determined to be the destination), the TCP accelerator 103 sends the packet to the virtual gateway 1036 via the virtual interface 1035 (S906). The virtual gateway 1036 decapsulates the received packet. Then the decapsulated packet is sent to the server 101 (S907, 908). The server 101 receives the packet, and thus the packet transmission from the server 102 to the server 101 is completed.

Thus, with this setting, in which the same communication path is used as that used when the server 101 sends a packet to the server 102, communication can efficiently be performed without imposing a load to the communication path serving as a standby path provided through the WAN 106.

Next, a technical idea extracted from the embodiments of the communication apparatus described above will be recited according to the form in which the claims are described. The technical idea according to the present invention may be understood on various levels and with variations, which range from a generic concept to a more specific concept, and the present invention is not intended to be limited to the following appendices.

## Claims

1. A communication apparatus for relaying communication between a first information processing apparatus (101) and a second information processing apparatus (102) through a plurality of communication paths (105, 106), the communication apparatus comprising:
a controller (201) to control the communication apparatus according to a process comprising:
storing received-data received from the first information processing apparatus in a storage unit (203) ;
sending the received-data as transmit-data, to the second information processing apparatus through a communication path;
determining whether the communication apparatus received acknowledgement response indicative of receipt of the transmit-data at the second information processing apparatus from the second information processing apparatus; and
resending the transmit-data to the second information processing apparatus through another communication path in the absence of a result of the determining the communication apparatus has not received the acknowledgement response from the second information processing apparatus.

2. The communication apparatus according to claim 1,
wherein the communication apparatus resends the transmit-data stored in said storage unit to the second information processing apparatus.

3. The communication apparatus according to claim 1,
wherein the communication apparatus receives the acknowledgement response through the communication path which the communication apparatus has sent the transmit-data therethrough.

4. The communication apparatus according to claim 1, wherein the process of the controller further comprises:
deleting the received-data from the storage unit in accordance with receiving the acknowledgement response.

5. The communication apparatus according to claim 1,
wherein the communication apparatus sends the transmit-data through the communication path selected on the basis of a routing table indicative of a communication path for sending the transmit-data therethrough.

6. The communication apparatus according to claim 1,
wherein the received-data includes a destination address, and wherein the communication apparatus stores the received-data in the storage unit, when the destination address refers to the second information processing apparatus.

7. The communication apparatus according to claim 1,
wherein when the communication apparatus does not receive the acknowledgment response after a preset time has elapsed, the controller sends the transmit-data to the second information processing apparatus through another communication path.

8. The communication apparatus according to claim 1,
wherein the acknowledgment response indicates a reception of the transmit-data from second information processing apparatus.

9. The communication apparatus according to claim 1, wherein the process of the controller further comprises:
determining whether to enable to communicate with the second information apparatus through the plurality of communication paths.

10. A communication method for relaying communication between a first information processing apparatus and a second information processing apparatus through a plurality of communication paths, the communication method comprising the steps of:
storing received-data received from the first information processing apparatus in a storage unit;
sending the received-data as transmit-data, to the second information processing apparatus through a communication path;
determining whether to receive acknowledgement response indicative of receipt of the transmit-data at the second information processing apparatus from the second information processing apparatus; and
resending the transmit-data to the second information processing apparatus through another communication path in the absence of a result of the determining not to receive the acknowledgement response from the second information processing apparatus.

11. A computer-readable recording medium that stores a communication program for relaying communication between a first information processing apparatus and a second information processing apparatus through a plurality of communication paths by controlling a communication apparatus according to a process comprising:
storing received-data received from the first information processing apparatus in a storage unit;
sending the received-data as transmit-data, to the second information processing apparatus through a communication path;
determining whether to receive acknowledgement response indicative of receipt of the transmit-data at the second information processing apparatus from the second information processing apparatus; and
resending the transmit-data to the second information processing apparatus through another communication path in the absence of a result of the determining not to receive the acknowledgement response from the second information processing apparatus.
